# EUROPEAN PATENT APPLICATION

(11) **EP 2 743 841 A2**
(43) Date of publication of application: **18.06.2014**
(21) Application number: 13190247.0
(22) Date of filing: 25.10.2013
(51) Int. Cl.: G06F 17/30

(54) **Display controller and display control method**

(30) Priority: 14.12.2012 JP 2012274029
(71) Applicant: FUJITSU LIMITED, Kawasaki-shi, Kanagawa 211-8588 (JP)
(72) Inventor: Nakamura, Ken, Kawasaki-shi, Kanagawa 211-8588 (JP); Akama, Katsuaki, Kawasaki-shi, Kanagawa 211-8588 (JP)
(74) Representative: Keltsch, Ulrike

(57) **Abstract**

In a wireless terminal (10), a processor (13) determines a reference object, as a display reference in a specified Web page, based on a correspondence relationship between objects, which are included in the specified Web page and are each linked to other Web pages, and the frequency of past selection of each object. The processor (13) then maps the specified Web page in a display memory, searches the specified Web page mapped in the display memory for the reference object, and sets a display window including the reference object, which has been searched for, in the display memory.

## Description

### FIELD

The embodiments discussed herein are directed to a display controller and a display control method.

### BACKGROUND

Conventionally, there have been a technique in which a user registers a position (i.e., coordinates) of a region (i.e., home position) to be displayed first when a portion of a Web (World Wide Web) page is displayed, and the registered home position is displayed when the Web page is specified and displayed. Through the use of this technique, the user can store in advance a region displayed at a high frequency to display the region preferentially.

Patent document 1: Japanese Laid-open Patent Publication No. 2008-262371

However, in the conventional technique, the region to be displayed preferentially is controlled by the position within the Web page, and hence, a layout change within the Web page may prevent the region desired by the user from being displayed.

Accordingly, it is an object in one aspect of an embodiment of the invention to provide a display controller and a display control method that can ensure that a region displayed at a high frequency in a Web page be displayed even when a layout change has been made within the Web page.

### SUMMERY

According to an aspect of an embodiment, a display controller includes a memory and a processor coupled to the memory the processor executes display control process comprising: determining a reference object as a display reference in a specified Web page based on a frequency of past selection of each object that is included in the specified Web page and is linked to another Web page, mapping the specified Web page in a display memory, searching the specified Web page mapped in the display memory for the reference object, and setting a display window that includes the reference object, which has been searched for, in the display memory.

### BRIEF DESCRIPTION OF DRAWINGS

FIG. 1 is a block diagram of an exemplary wireless terminal according to a first embodiment;
FIG. 2 is a diagram of exemplary information of a specified Web page described in HTML;
FIG. 3 is a diagram of an exemplary correspondence table according to the first embodiment;
FIG. 4 is a flowchart for describing a processing operation of the wireless terminal according to the first embodiment;
FIG. 5 is a flowchart of exemplary processing to determine a reference object;
FIG. 6 is a diagram of an exemplary correspondence table according to a second embodiment;
FIG. 7 is a diagram for describing a processing operation of a processor according to a third embodiment;
FIG. 8 is a diagram for describing the processing operation of the processor according to the third embodiment;
FIG. 9 is a flowchart for describing a processing operation of a wireless terminal according to a fourth embodiment;
FIG. 10 is a diagram of exemplary information of a specified Web page described in HTML;
FIG. 11 is a diagram of an exemplary second correspondence table;
FIG. 12 is a diagram of an HTML file mapped in a display memory;
FIG. 13 is a diagram for describing a rectangular region corresponding to an object;
FIG. 14 is a diagram of an exemplary third correspondence table;
FIG. 15 is a diagram for describing setting of a display window;
FIG. 16 is a diagram of the display memory with the display window that has been set;
FIG. 17 is a diagram of an exemplary image, which is within the set display window and is displayed on the display unit; and
FIG. 18 is a flowchart for describing processing to update the third correspondence table.

### DESCRIPTION OF EMBODIMENTS

Preferred embodiments of the present invention will be explained with reference to accompanying drawings. Although the embodiments will be described with an example in which the display controller is applied to a wireless terminal, embodiments are not limited thereto. That is, the display controller and the display control method disclosed herein are not limited to these embodiments. In addition, in the embodiments herein, components with same functions are indicated by same reference characters and the descriptions thereof will be omitted.

### [a] First embodiment

### Configuration of wireless terminal

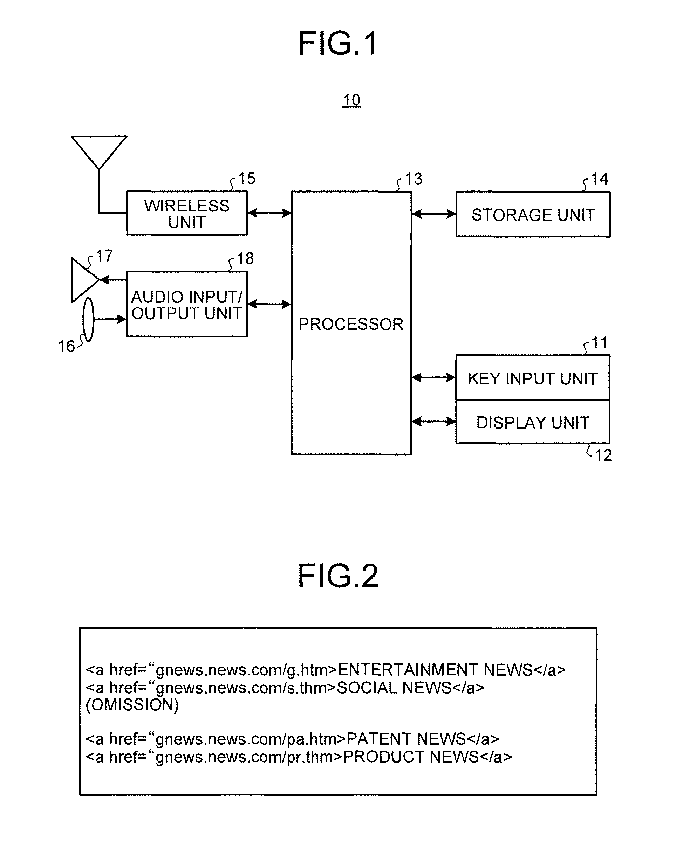

FIG. 1 is a block diagram of an exemplary wireless terminal according to the first embodiment. In FIG. 1, a wireless terminal includes a key input unit 11, a display unit 12, a processor 13, a storage unit 14, a wireless unit 15, a microphone 16, a speaker 17, and an audio input/output unit 18.

The key input unit 11 outputs an operation signal to the processor 13 corresponding to an operation of a user.

The display unit 12 displays image data that is mapped in a display memory by the processor 13 and is included in a display window.

Upon receipt of a specifying signal from the key input unit 11, the processor 13 acquires, through wireless communication from a server, information of a specified Web page specified by the specifying signal. The information of the specified Web page is described in, for example, HTML (HyperText Markup Language). FIG. 2 is a diagram of exemplary information of a specified Web page described in HTML. This information of the specified Web page may be referred to as HTML information hereinafter.

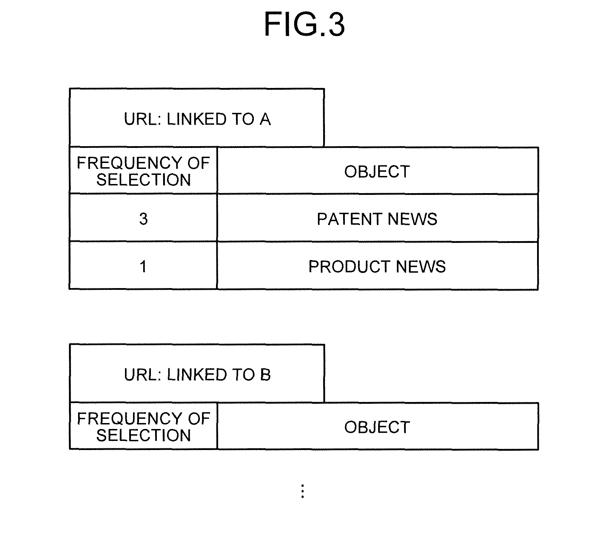

In addition, the processor 13 determines a reference object in accordance with identification information of the specified Web page and a correspondence table stored in the storage unit 14. The reference object is an object that serves as a display reference within a specified Web page. An object refers to, for example, a text, an image, or an icon. As illustrated in FIG. 3, the correspondence table of the first embodiment indicates the correspondence between a plurality of candidates for the specified Web page and the frequency of past selection corresponding to each of objects included in each candidate. This correspondence table may be referred to as a first correspondence table hereinafter. In FIG. 3, the identification information of the specified Web page is controlled by the URL (Uniform Resource Locator).

Here, an object, which corresponds to the specified Web page in the first correspondence table and which has the highest frequency of specification, is selected as the reference object.

In addition, the processor 13 maps the HTML information acquired from the server in the display memory (not illustrated). The processor 13, then, searches the specified Web page mapped in the display memory for the determined reference object. In this way, the position of the reference object in the specified Web page mapped in the display memory is determined. Note that when the information on the reference object is not included in the HTML information acquired from the server, the processor 13 deletes the information on the reference object from the correspondence table.

The processor 13, then, sets the display window in the display memory such that the position of the reference object, which has been searched for, is included. In this way, the information mapped in the display memory and included in the display window is displayed on the display unit 12. Note that when the information of the specified Web page is absent in the correspondence table, the specified Web page and information on an object included in the specified Web page are added to the correspondence table. In such a case, the display window is set at the top of the specified Web page.

In addition, when an object within the Web page displayed on the display unit 12 is selected through an operation of the key input unit 11 by the user, the processor 13 increments the frequency of selection for the selected object in the correspondence table.

Here, the processing by the processor 13 is performed in accordance with a program stored in the storage unit 14.

The storage unit 14 includes, for example, a RAM, such as an SDRAM (Synchronous Dynamic Random Access Memory), a ROM (Read Only Memory), and a flash memory.

The audio input/output unit 18 allows the speaker 17 to produce sound in accordance with audio data received from the processor 13. The audio input/output unit 18 also acquires an audio signal through the microphone 16 to output the signal to the processor 13.

### Operation of wireless terminal

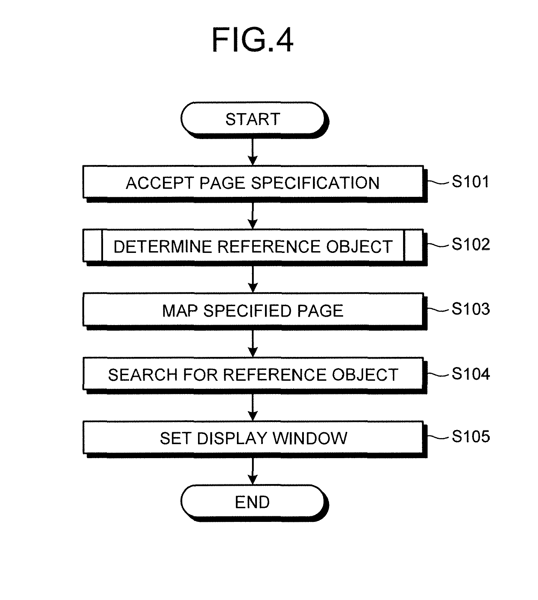

An operation of the wireless terminal 10 with the foregoing configuration will now be described. FIG. 4 is a flowchart for describing a processing operation of the wireless terminal 10.

In the wireless terminal 10, the processor 13 receives the specifying signal from the key input unit 11 to accept page specification (step S101). The processor 13 then acquires, from the server through the wireless communication using the wireless unit 15, the information of the specified Web page specified by the specifying signal.

The processor 13 performs processing to determine a reference object (step S102). In the processing to determine a reference object, firstly, a reference object is determined in accordance with the identification information of the specified Web page and the correspondence table stored in the storage unit 14.

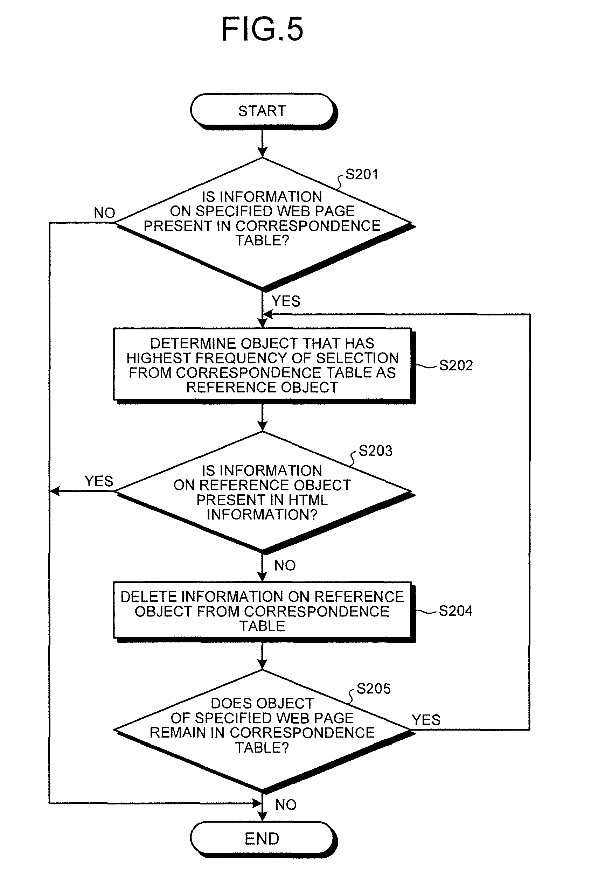

FIG. 5 is a flowchart of exemplary processing to determine a reference object.

The processor 13 judges whether or not information on the specified Web page is present in the correspondence table (step S201).

When it is judged that the information is present (YES at step S201), the processor 13 determines, as the reference object, an object that has the highest frequency of selection among objects of the specified Web page from the correspondence table (step S202).

The processor 13 judges whether or not information on the determined reference object is present in the HTML information (step S203).

When it is judged that the information is absent (No at step S203), the processor 13 deletes the information on the determined reference object from the correspondence table (step S204).

The processor 13 judges whether or not an object of the specified Web page remains in the correspondence table (step S205). When an object remains (Yes at step S205), the processing reverts back to step S202.

Note that when it is judged that the information is absent in step S201, when it is judged that the information is present in step S203, or when it is judged that an object does not remain in step S205, the processing to determine a reference object is finished.

With reference to FIG. 4, the processor 13 maps the HTML information acquired from the server in the display memory (step S103).

The processor 13 searches the specified Web page mapped in the display memory for the reference object determined in step S102 (step S104). Note that when a reference object has not been determined in step S102, the processor 13 performs processing to set the display window in step S105, instead of the processing to search for the reference object in step S104.

The processor 13 sets the display window in the display memory such that the position of the reference object, which has been searched for in step S104, is included (step S105). Note that when a reference object has not been determined in step S102, the processor 13 sets the display window at the top of the specified Web page mapped in the display memory (step S105).

In this way, the information mapped in the display memory and included in the display window is displayed on the display unit 12.

When an object within the Web page displayed on the display unit 12 is selected through an operation of the key input unit 11 by the user, the processor 13 then increments the frequency of selection for the selected object in the correspondence table.

As described above, according to the present embodiment, the processor 13 in the wireless terminal 10 determines, in accordance with a correspondence relationship, a reference object that serves as a display reference within a specified Web page. This correspondence relationship refers to a correspondence relationship between objects, which are included in the specified Web page and are each linked to other Web pages, and the frequency of past selection of each object. The processor 13 then maps the specified Web page in the display memory, searches the specified Web page mapped in the display memory for the reference object, and sets a display window including the reference object, which has been searched for, in the display memory.

In this way, the reference object is determined in accordance with the frequency of past selection of each object, so that an object with a high frequency of display can be determined. In addition, the specified Web page is mapped in the display memory, and the specified Web page mapped in the display memory is searched for a reference object, which allows reliable determination of the position of the reference object even when a layout change has been made within a Web page. As a result, a region displayed at a high frequency in a Web page can be displayed reliably.

### [b] Second embodiment

In a second embodiment, the first correspondence table further indicates the correspondence to an enlargement ratio used when a specified Web page has been displayed at the previous time. Note that the basic configuration of a wireless terminal according to the second embodiment is similar to that of the first embodiment, and thus the present embodiment will be described with reference to FIG. 1.

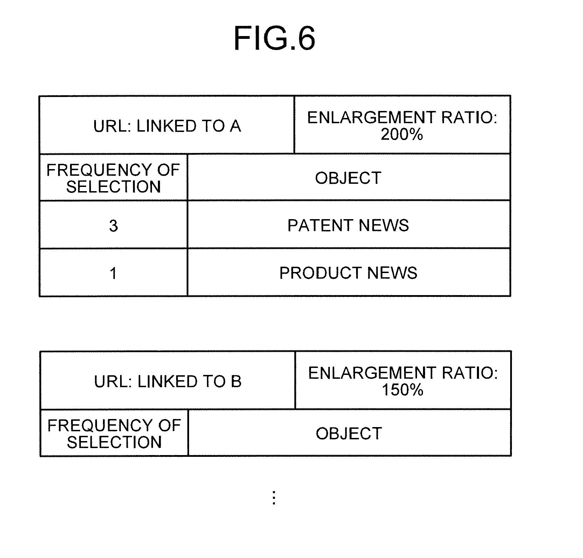

A storage unit 14 of a wireless terminal 10 according to the second embodiment stores a first correspondence table. FIG. 6 is a diagram of an exemplary correspondence table according to the second embodiment. As illustrated in FIG. 6, the correspondence table according to the second embodiment indicates the correspondence between objects, which are included in the specified Web page and are each linked to other Web pages, the frequency of past selection of each object, and the enlargement ratio used when the specified Web page has been displayed at the previous time.

When mapping the specified Web page in a display memory, a processor 13 maps the specified Web page according to the enlargement ratio that corresponds to the specified Web page in the first correspondence table.

As described above, according to the present embodiment, the correspondence table of the storage unit 14 in the wireless terminal 10 indicates the correspondence between objects, which are included in a specified Web page and are each linked to other Web pages, the frequency of past selection of each object, and the enlargement ratio used when the specified Web page has been displayed at the previous time. The processor 13 then maps the specified Web page in the display memory in accordance with the enlargement ratio. The processor 13 then searches the specified Web page mapped in the display memory for a reference object and sets a display window including the reference object, which has been searched for, in the display memory.

In this way, the reference object can be displayed reliably according to an enlargement ratio that suits a preference of the user.

Note that, although the enlargement ratio is controlled for each specified Web page in the example described above, the control is not limited thereto. The enlargement ratio may be controlled for each object. That is, the correspondence table may indicate the correspondence between objects, which are included in a specified Web page and are each linked to other Web pages, the frequency of past selection of each object, and the enlargement ratio used when each object has been selected at the previous time.

### [c] Third embodiment

In a third embodiment, during the processing to set a display window, automatic scrolling processing is performed. Note that the basic configuration of a wireless terminal according to the third embodiment is similar to that of the first embodiment, and thus the present embodiment will be described with reference to FIG. 1.

In the processing to set the display window, a processor 13 of a wireless terminal 10 according to the third embodiment sets the display window at the top of a specified Web page mapped in a display memory, and then slides the display window to the position of a reference object, which has been searched for. That is, the processor 13 performs automatic scrolling processing during the processing to set the display window.

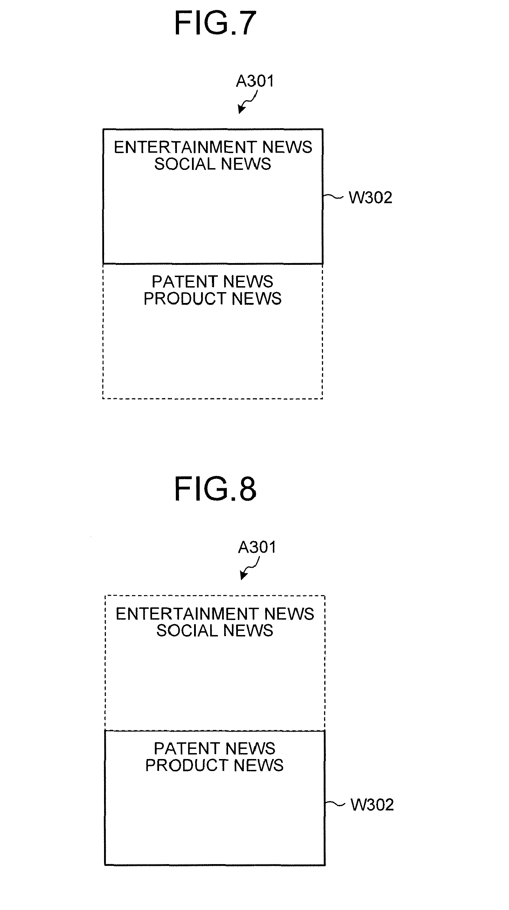

FIGS. 7 and 8 are diagrams for describing the processing operation of the processor according to the third embodiment. In FIGS. 7 and 8, A301 denotes a memory region of the display memory, and W302 denotes the display window that has been set.

The processor 13 of the wireless terminal 10 according to the third embodiment first sets the display window at the top of the specified Web page mapped in the display memory (see FIG. 7).

The processor 13 then slides the display window set at the top of the specified Web page to the position of the reference object, which has been searched for. That is, in a case where patent news is the reference object, a display window including the patent news is set as illustrated in FIG. 8.

As described above, during the processing to set the display window, the processor 13 in the wireless terminal 10 according to the present embodiment sets the display window at the top of the specified Web page, and then slides the display window to a position including a reference object, which has been searched for.

In this way, a process of moving from the top of the specified Web page to the position including the reference object can be displayed, which allows the user to recognize the positional relationship between the top of the specified Web page and the reference object.

### [d] Fourth embodiment

A fourth embodiment relates to a specific example of the processing to map HTML information, the processing to search for a reference object, the processing to set the display window, and the processing to update the correspondence table of the wireless terminal 10 according to the first to third embodiments. Note that the basic configuration of a wireless terminal according to the fourth embodiment is similar to that of the first embodiment, and thus the present embodiment will be described with reference to FIG. 1.

Processing to map HTML information, processing to search for a reference object, and processing to set a display window

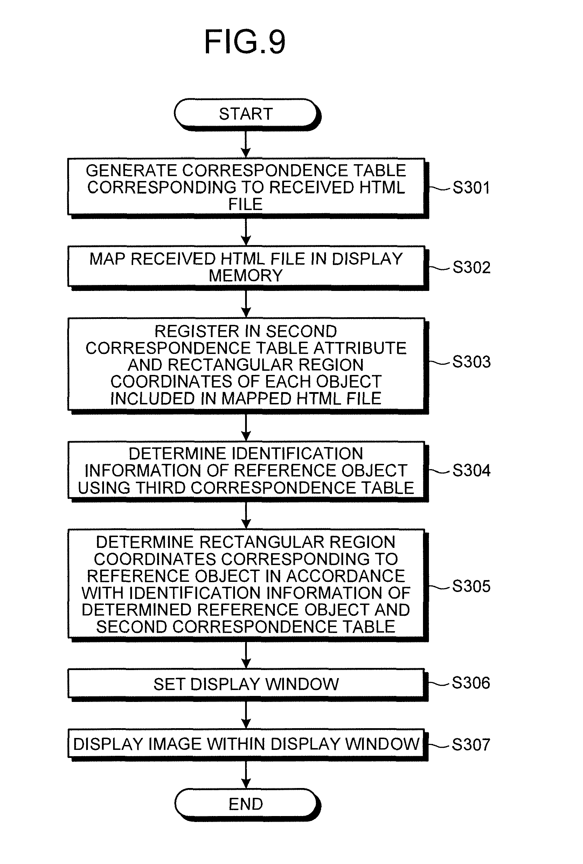

FIG. 9 is a flowchart for describing a processing operation of a wireless terminal according to the fourth embodiment.

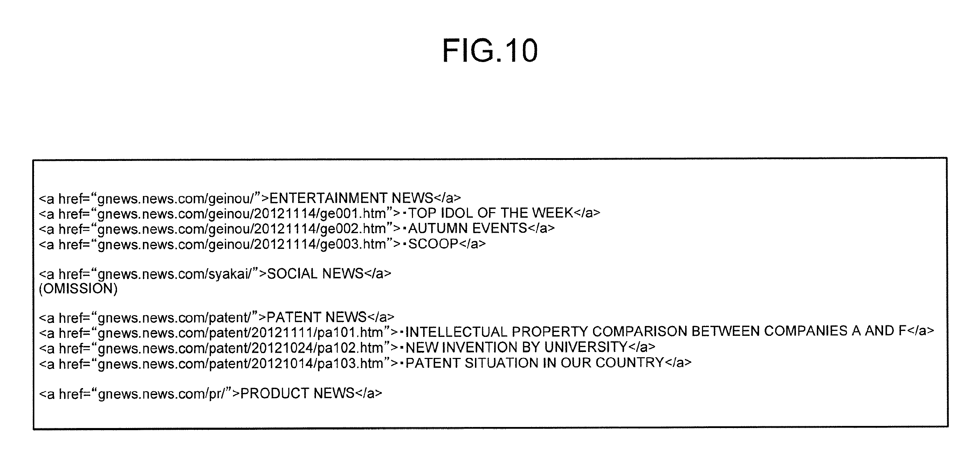

Upon receipt of a specifying signal from a key input unit 11, a processor 13 of a wireless terminal 10 according to the fourth embodiment acquires, through the wireless communication from the server, information of a specified Web page specified by the specifying signal. The information of the specified Web page is described in HTML (HyperText Markup Language). That is, the processor 13 acquires an HTML file from the server. FIG. 10 is a diagram of exemplary information of the specified Web page described in HTML. In FIG. 10, each object, in other words, each anchor has a URL (Uniform Resource Locator). For example, the second anchor from the top in FIG. 10 has a URL "gnews.news.com/geinou/20121114/ge001.htm". Here, "gnews.news.com/geinou" is a first level directory and "gnews.news.com/geinou/20121114" is a second level directory. The first level directory is used as identification information of the object.

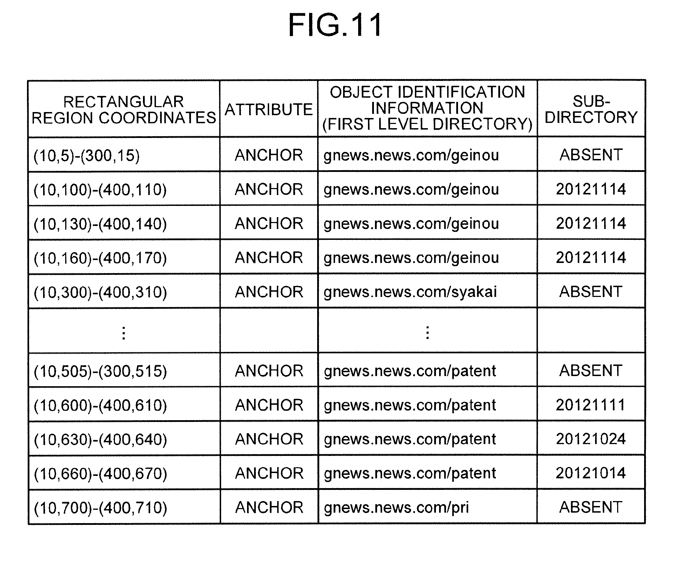

The processor 13 generates a second correspondence table corresponding to the received HTML file (step S301). The second correspondence table is a table that indicates the correspondence between the object identification information and coordinates within a display memory. FIG. 11 is a diagram of an exemplary correspondence table between the object identification information and coordinates within the display memory. Note that, at this stage, items other than "rectangular region coordinates" and "attribute" are registered in accordance with the information described in the HTML file.

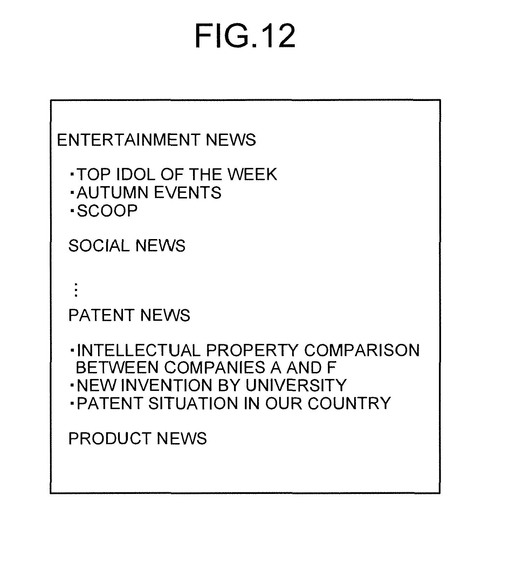

The processor 13 maps the received HTML file in the display memory (step S302). FIG. 12 is a diagram of the HTML file mapped in the display memory. In FIG. 12, the HTML file illustrated in FIG. 10 has been mapped in the display memory. In FIG. 12, the inside of the outer frame is a memory region of the display memory.

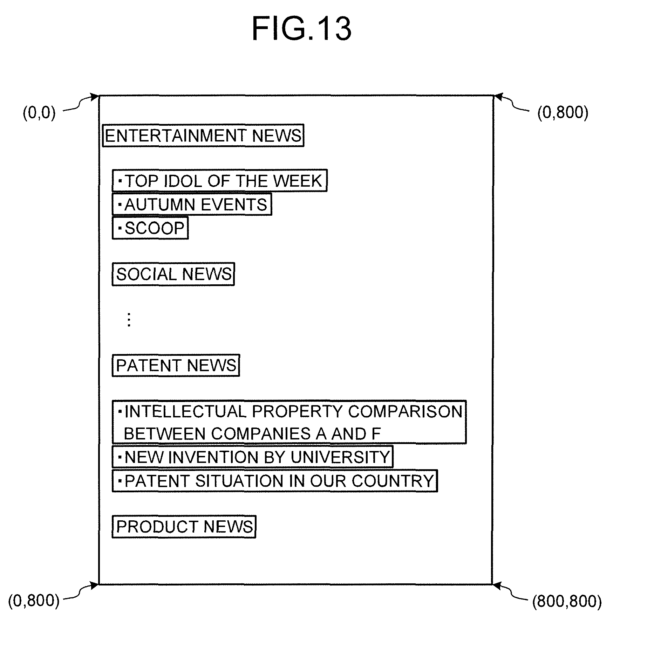

The processor 13 uses the HTML file mapped in the display memory as illustrated in FIG. 12 to determine the attribute of each object included in the HTML file and the coordinates, on the display memory, of a "rectangular region" corresponding to each object. The processor 13 then registers the determined attribute and the "rectangular region coordinates" of each object in the second correspondence table to indicate the correspondence to the identification information and a subdirectory already registered for each object (step S303). FIG. 13 is a diagram for describing a rectangular region corresponding to an object. In FIG. 13, the HTML file is mapped in the display memory similarly to FIG. 12. In FIG. 13, a rectangle enclosing each object defines a rectangular region. The rectangular region coordinates described above refer to, for example, coordinates, on the display memory, of two opposite vertexes of a rectangular region. Here, the memory region of the display memory has 800 coordinates in a vertical direction (i.e., a Y axis direction) and 800 coordinates in a horizontal direction (i.e., X coordinates).

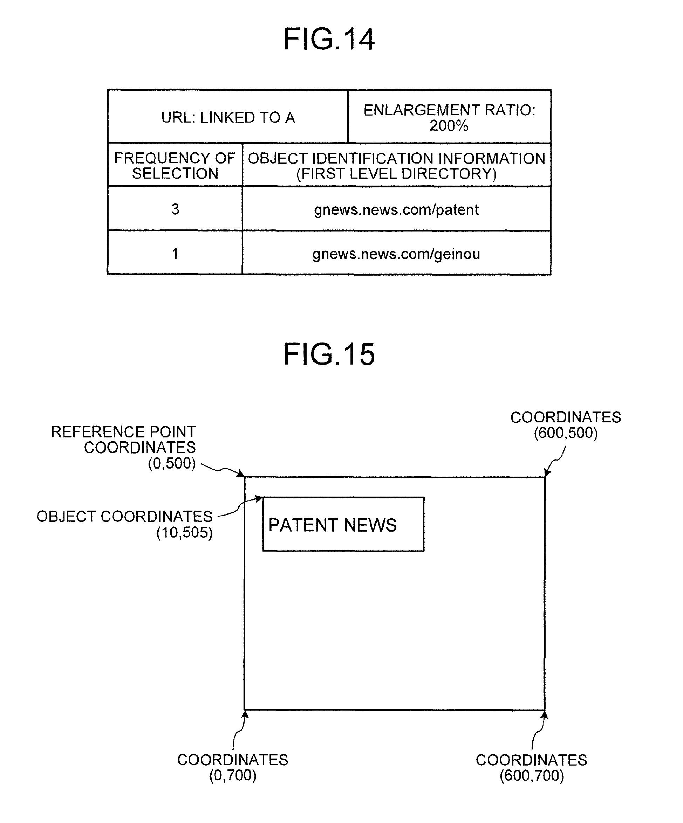

The processor 13 determines the identification information of a reference object in accordance with the identification information of the HTML file, which in other words is the identification information of the specified Web page, and a third correspondence table (step S304). The third correspondence table and the first correspondence table are similar to each other, but the third table indicates the correspondence between the HTML file, which is in other words a candidate for the specified Web page, and the frequency of past selection corresponding to the identification information of each object included in the candidate, as illustrated in FIG. 14. Here, an object, which corresponds to the specified Web page in the third correspondence table and which has the highest frequency of specification, is selected as the reference object. In FIG. 14, an object with the object identification information "gnews.news.com/patent", which is in other words the patent news, is selected as the reference object since the patent news has the highest frequency of selection.

The processor 13 determines the rectangular region coordinates corresponding to the reference object in accordance with the identification information of the determined reference object and the second correspondence table (step S305). That is, the rectangular region coordinates (10,505)-(300,515), which correspond to "gnews.news.com/patent" in the second correspondence table of FIG. 11, are determined.

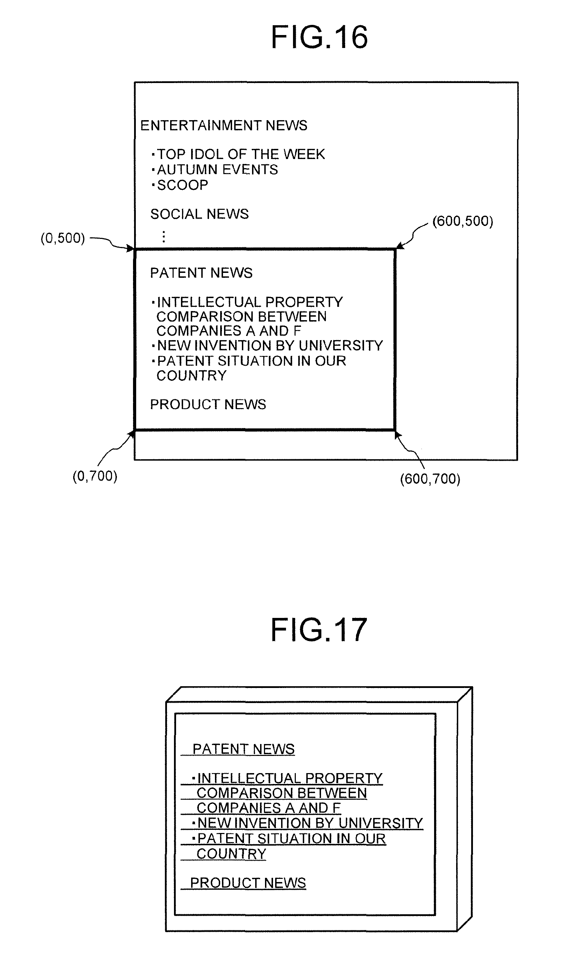

The processor 13 sets the display window in the display memory such that the determined rectangular region coordinates are included (step S306). For example, when the rectangular region coordinates include coordinates of a top left vertex and a bottom right vertex thereof, the processor 13 sets the display window by aligning a reference point of the display window with coordinates which are present outside of the rectangular region and have a predetermined positional relationship with the top left vertex of the rectangular region. Here, the reference point of the display window is, for example, a top left vertex of the display window having a rectangular shape. FIG. 15 is a diagram for describing setting of the display window. In FIG. 15, the reference point of the display window is aligned with a position shifted by 10 in an X axis direction and 5 in the Y axis direction from the determined rectangular region coordinates. In addition, the display window has a size of 200 coordinates in the vertical direction (i.e., the Y axis direction) and 600 coordinates in the horizontal direction (i.e., X coordinates). The display memory with the display window set in this way is illustrated in FIG. 16.

The processor 13 allows display of an image within the display window that has been set (step S307). For example, the processor 13 copies the image in the display window that has been set from the display memory and allows a display unit 12 to display the copied image. FIG. 17 is a diagram of an exemplary image, which is within the set display window and is displayed on the display unit.

The user changes the enlargement ratio of the image displayed on the display unit 12 in this way, or selects an object included in the image to change what is being displayed to a page corresponding to the object. When such an operation is performed, processing to update the third correspondence table as described hereinafter will be started.

Processing to update the third correspondence table

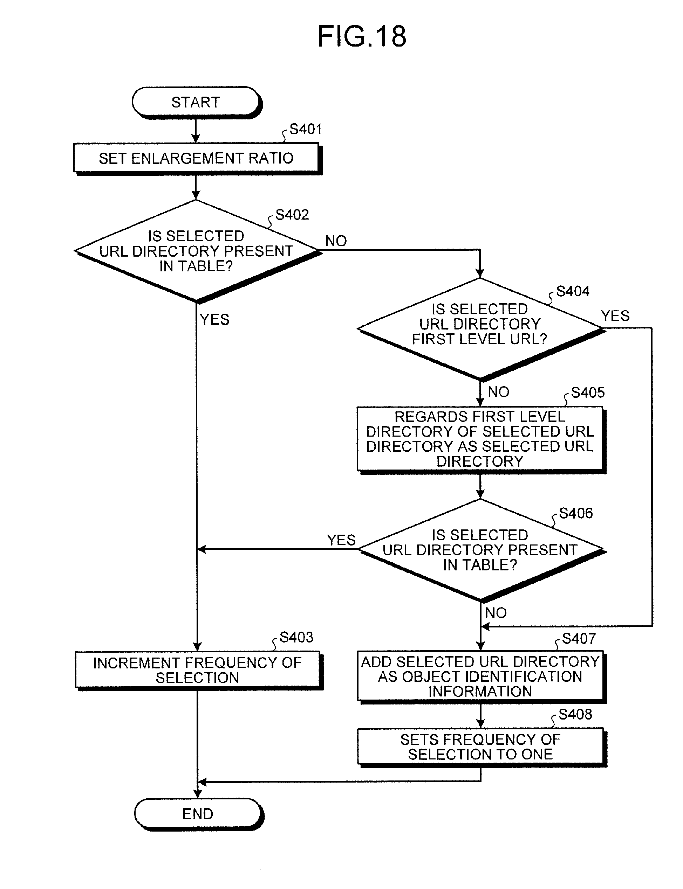

FIG. 18 is a flowchart for describing processing to update the third correspondence table.

The processor 13 sets an enlargement ratio used when the user has selected the object in the third correspondence table (step S401).

The processor 13 judges whether a URL directory corresponding to the selected object (hereinafter also referred to as "selected URL directory") is present in the third correspondence table (step S402).

When the selected URL directory is present in the third correspondence table (Yes at step S402), the processor 13 increments the frequency of selection which corresponds to the selected URL directory in the third correspondence table (step S403).

When the selected URL directory is absent in the third correspondence table (No at step S402), the processor 13 judges whether the selected URL directory is a first level directory (step S404).

When the selected URL directory is not a first level directory (No at step S404), the processor 13 regards the first level directory of the selected URL directory as the selected URL directory (step S405).

The processor 13 judges whether the selected URL directory changed in step S405 is present in the third correspondence table (step S406).

When the selected URL directory changed in step S405 is present in the third correspondence table (Yes at step S406), the processor 13 increments the frequency of selection which corresponds to the selected URL directory in the third correspondence table (step S403).

When the selected URL directory changed in step S405 is absent in the third correspondence table (No at step S406), the processor 13 adds the selected URL directory to the third correspondence table as the object identification information (step S407).

The processor 13 sets the frequency of selection corresponding to the added selected URL directory to one (step S408).

Note that, when the selected URL directory is the first level directory (Yes at step S404), the processor 13 performs the processing of steps S407 and S408.

As described above, the processing to map the HTML information, the processing to search for the reference object, the processing to set the display window, and the processing to update the correspondence table are performed.

### Other embodiments

[1] Although the first to fourth embodiments have been described with an example in which the information of the specified Web page is acquired through the wireless communication, embodiments are not limited thereto and the information may be acquired through cable communication.
[2] Although the first to fourth embodiments have been described with an example in which a display controller is applied to a wireless terminal, embodiments are not limited thereto and the display controller described in the first to fourth embodiments may be applied to various electronic devices.

According to an aspect of the disclosure, a region displayed at a high frequency within a Web page can be displayed reliably.

## Claims

1. A display controller (10), comprising:
a memory (14) and
a processor (13) coupled to the memory (14),
wherein the processor (13) executes display control process comprising:
determining a reference object as a display reference in a specified Web page based on a frequency of past selection of each object that is included in the specified Web page and is linked to another Web page,
mapping the specified Web page in a display memory,
searching the specified Web page mapped in the display memory for the reference object, and
setting a display window that includes the reference object, which has been searched for, in the display memory.

2. The display controller (10) according to claim 1,
wherein the mapping includes mapping the specified Web page in the display memory in accordance with an enlargement ratio used when the specified Web page has been displayed previously.

3. The display controller (10) according to claim 1 or 2,
wherein, in the setting of the display window, the display window is set at a top of the specified Web page and then is slid to a position that includes the reference object, which has been searched for.

4. The display controller (10) according to any one of claims 1 to 3,
wherein the reference object is an object with a highest frequency of selection.

5. A display control method comprising:
determining a reference object as a display reference in a specified Web page based on a frequency of past selection of each object that is included in the specified Web page and is linked to another Web page;
mapping the specified Web page in a display memory;
searching the specified Web page mapped in the display memory for the reference object; and
setting a display window that includes the reference object, which has been searched for, in the display memory.
